# EUROPÄISCHE PATENTSCHRIFT

(11) **EP 2 592 976 B1**
(45) Veröffentlichungstag und Bekanntmachung des Hinweises auf die Patenterteilung: **10.06.2015**
(21) Anmeldenummer: 11733797.2
(22) Anmeldetag: 13.07.2011
(51) Int. Cl.: A47J 27/16, A47J 27/04

(54) **DAMPFGARER**
STEAM COOKER
CUISEUR À VAPEUR

(30) Priorität: 16.07.2010 DE 202010010304 U
(43) Veröffentlichungstag der Anmeldung: 22.05.2013
(73) Patentinhaber: Silit-Werke GmbH & Co. KG, 88499 Riedlingen (DE)
(72) Erfinder: SCHOBLOCH, Jochen, 88422 Bad Buchau (DE); ROTH, Klaus, 88527 Unlingen (DE)
(74) Vertreter: Grünecker Patent- und Rechtsanwälte PartG mbB
(86) Internationale Anmeldenummer: PCT/EP2011/003501
(87) Internationale Veröffentlichungsnummer: WO 2012/007162

(56) Entgegenhaltungen:
- DE-U1-202006 005 562
- US-S1- D 470 714

## Beschreibung

Die Erfindung betrifft einen Dampfgarer.

Bekannte Dampfgarer sind häufig durch die Form des Dampfgarers und insbesondere durch die Anbringung der Griffe nur eingeschränkt in kleinen Backöfen verwendbar. Ferner sind bei entsprechenden Deckeln für Dampfgarer häufig Probleme zu beobachten, dass sich diese Deckel ungewollt am Rand des Dampfgarers festsaugen oder aber, zum Beispiel bei einem Innendruck im Dampfgarer, welcher höher als der Außendruck der Umgebung ist, insbesondere bei Dampfbildung im Dampfgarer, ein unkontrollierter Druckausgleich geschieht, so dass sich ein gewöhnlicher Deckel auf dem Dampfgarer bewegt, klappert oder sogar "tanzt". Beim Dampfgaren ist ferner das Problem zu beachten, dass zum Beispiel am Deckel oder an Seiten kondensierender Wasserdampf wieder in den Dampfgarer zurück laufen sollte. Ferner gibt es durch moderne internationale Einflüsse auf die Küche häufig den Wunsch, ein mehrstöckiges Dampfgaren zu realisieren. Ferner wird bei allen modernen Geräten insbesondere auf die Energieeffizienz der Geräte und System geachtet.

In der DE 20 2006 005 562 U und der USD470,7145 werden Kochegefäße beschrieben, welche als nützlich für das Verständnis der Erfindung angesehen werden.

Der Erfindung liegt die Aufgabe zugrunde, angesichts der oben geschilderten Probleme einen multifunktionalen Dampfgarer bereit zu stellen, welcher eine hohe Energieeffizienz aufweist und dessen Elemente funktional effektiv aufeinander abgestimmt sind.

Die Aufgabe wird durch einen Dampfgarer mit den im Anspruch 1 angegebenen Merkmalen gelöst.

Der erfindungsgemäße,Dampfgarer umfasst ein Unterteil mit hochgezogenen Seitenwänden, wobei die Seitenwände zwei lange und zwei kurze Seiten umfassen, mit an den gegenüberliegenden langen Seitenwänden diametral versetzt zueinander angebrachten Griffen; einen Deckel mit einer Zarge, einem Deckelkörper, einem Deckelgriff, und mehreren Öffnungen zum Druckausgleich; weiterhin umfassend mindestens einen Dampfgareinsatz zum Einsetzen in das Unterteil mit hochgezogenen Seitenwänden, der Dampfgareinsatz mit versetzt angeordneten Griffen und mit Durchbrüchen zum Durchströmen von Dampf.

Die Anordnung der Griffe hat insbesondere Vorteile für die Handhabung und die Verwendung des Dampfgarers in kleineren Backöfen, wodurch die Gesamtlänge des Unterteils, der Grundform, des Dampfgarers nicht zusätzlich durch die Griffe vergrößert wird. Ferner ergibt sich eine gute Handhabung des Dampfgarers, etwa ein guter Hebel, wenn dieser getragen werden muss, und eine gute Erreichbarkeit der Griffe Die Griffe können vorteilhafterweise aus geeigneten, temperaturstabilen Materialien gefertigt sein. Das Unterteil mit hochgezogenen Seitenwänden kann dabei in einer weiteren Funktion auch zum Zubereiten von Braten oder Aufläufen im Sinne eines Bräters verwendet werden.

Die Grundform des Unterteils kann rechteckig oder einem Rechteck ähnlich oder eine Mischung aus Rechteck oder Oval (Ellipse), so dass zwei kurze und zwei lange Seiten entstehen. Ferner kann die Form des Unterteils mit hochgezogenen Seitenwänden kann dabei wannenförmig oder wannenähnlich sein. Eine entsprechende Grundform ist vorteilhaft für die Verwendung auf handelsüblichen, häufig oval (elliptisch) geformten Kochplatte moderner Kochherde.

Das Unterteil mit den hochgezogenen Seitenwänden des Dampfgarers kann aus Eisenstählen mit Silargan-Beschichtung und typischerweise vernickelt und verchromten Schütträndern sein, oder aus Chrom-Nickel-Stählen oder Chrom-Stählen sein. Diese Materialien halten im Vergleich zu herkömmlichen Materialien wie zum Beispiel Aluminium oder Kupfer besser die Hitze, so dass Energie effizienter genutzt werden kann.

Dabei kann der Dampfgareinsatz stapelbar sein, insbesondere können mehrere, beispielsweise zwei Dampfgareinsätze auf einander gestapelt in den Dampfgarer eingesetzt werden. Dabei kann bei Verwendung von mehreren Dampfgareinsätzen die Höhe der Dampfgareinsätze unterschiedlich sein, wodurch die gesamte Höhe optimal genutzt und aufgeteilt werden kann. Der Dampfgareinsatz kann Durchbrüche zum Durchströmen von Dampf in den Seitenwänden oder in den Böden oder in den Seitenwänden und in den Böden aufweisen. Durch die versetzt angeordneten Griffe wird auch bei den Dampfgareinsätzen, ähnlich wie beim Unterteil mit hochgezogenen Seitenwänden, eine besondere Kompaktheit erzielt, welche insbesondere für die Verwendung der Dampfgareinsätze im Dampfgarer in kleineren Backöfen von Vorteil sein kann.

Die Griffe des Dampfgareinsatzes können insbesondere gespiegelt bezüglich der Griffe des Unterteils mit hochgezogenen Seitenwänden angeordnet sein. Hierdurch wird die Handhabung des Dampfgareinsatzes verbessert wird. Ferner können die ein oder mehreren Dampfgareinsätze insbesondere unter Verwendung von zum Beispiel Handschuhen, Topflappen oder Tüchern, in den Dampfgarer eingesetzt oder herausgenommen werden. Durch die gespiegelte Anordnung ist dabei eine besondere Erreichbarkeit der Griffe der ein oder mehreren Dampfgareinsätze gegeben.

Ein Dampfgareinsatz wie oben beschrieben kann weiterhin Positioniereinrichtungen umfassen, insbesondere zum Beispiel Schlitze, Sicken oder Bohrungen, welche geeignet sind für das Einsetzen von ein oder mehrere Teilerblechen zur Auf- beziehungsweise Abteilung der Einsätze, so dass mehrer Speisen oder Gerichte, abgeteilt in einem Garprozess gegart werden können.

Der Dampfgareinsatz kann ferner vorteilhafterweise einen Rand aufweisen, der mit nach innen zeigendem Gefälle ausgebildet ist. Dadurch kann, insbesondere wenn der Rand über das Unterteil mit hochgezogenen Seitenwänden des Dampfgarers hinausragt und wenn zusätzlich ein Deckel verwendet wird, Kondenswasser einfach wieder in den Innenraum zurücklaufen kann.

Der Dampfgareinsatz kann typischerweise einen Boden besitzen, in den Höhenstufen mit beispielsweise kreuzförmigen oder rechteckigen Profilen eingeformt sein können, so dass einerseits die Steifigkeit des Einsatzes erhöht wird und dazu andererseits das Absetzen, Bewegen oder Ziehen des Einsatzes auf empfindlichen Oberflächen diese nicht verkratzt. Typischerweise kann der erfindungsgemäße Dampfgareinsatz aus Chrom-Nickel-Stahl oder Chrom-Stählen oder anderen temperaturstabilen Materialien ausgebildet sein. Dabei hat Chrom-Nickel-Stahl den Vorteil, dass es besonders temperaturstabil und nichtrostend ist und auch bei Verwendungen mit Temperaturen über 100° C, zum Beispiel Überbacken, einsetzbar ist.

Der Deckel des erfindungsgemäßen Dampfgarers kann typischerweise passend zur Grundform geformt sein. Insbesondere kann die Zarge des Deckels aus Silikon gefertigt sein, welches den Vorteil hat, dass es besonders temperaturstabil ist. Es sind aber auch andere geeignet temperaturstabile Materialien denkbar. Die ein oder mehreren Öffnungen des Deckels können vorzugsweise in den Seitenrändern des Deckels oder im Deckelkörper geformt sein, also beispielsweise dort, wo der Deckel auf dem Rand der hochgezogenen Seitenwände aufliegt oder in unmittelbarer Nähe des Auflagebereichs. Der Vorteil der Öffnungen ist, dass ein Druckausgleich zwischen der Umgebung einerseits und dem mit dem Deckel abgedeckten Volumen andererseits ermöglicht wird, so dass Über- oder Unterdruck vermieden werden kann und der Deckel jederzeit stabil aufliegt und dabei jederzeit leicht abzuheben ist. Die Öffnungen können schlitzartig oder lanzettartig ausgebildet sein. Ferner können die Öffnungen mit Membranen aus geeignetem Material versehen sein. Die Größe der Öffnungen ist typischerweise optimiert hinsichtlich einer Reduzierung der Dampfaustrittsgeschwindigkeit, so dass Dampfkondensation außerhalb des Dampfgarers, zum Beispiel an Wänden oder Flächen reduziert oder gar vermieden werden kann.

Der Deckel des Dampfgarers kann eine weitere Öffnung im Deckel aufweisen, typischerweise in der Wölbung des Deckels, wodurch die Verwendung eines Thermometereinsatzes oder eines Thermometers ermöglicht wird, das beispielweise durch diese Öffnung hindurch gesteckt werden kann. Diese Öffnung im Deckel kann ferner auch dazu ausgebildet sein, einen Druckausgleich herstellen zu können. Auch diese Öffnung kann zusätzlich mit einer Membran ausgestattet sein, die das Einstecken entsprechend geformter Einsätze, zum Beispiel Thermometer, ermöglicht. Dadurch wird eine Überwachung der Dampfgartemperatur ermöglicht und der Benutzer kann jederzeit entsprechend reagieren, wenn die gewünschte Gartemperatur der Speisen erreicht ist.

Die Kombination des erfindungsgemäßen Dampfgarers mit mehreren Zuberhörteilen wie einem oder mehreren erfindungsgemäßen Dampfgareinsätzen und einem erfindungsgemäßen Deckel ermöglicht es, ein Dampfgarsystem bereit zu stellen. Insbesondere kann bei Verwendung von zwei erfindungsgemäßen Dampfgareinsätzen zusammen mit dem erfindungsgemäßen Unterteil mit hochgezogenen Seitenwänden und dem erfindungsgemäßen Deckel ein Doppelstock-Dampfgarsystem bereit gestellt werden.

Ausführungsbeispiele und Kombinationsbeispiele der Erfindung werden nachfolgend anhand der Figuren näher erläutert. Es zeigen:
- Fig. 1: Eine Ansicht des Unterteils mit hochgezogenen Seitenwänden des erfindungsgemäßen Dampfgarers,
- Fig. 2A: Eine Ansicht eines erfindungsgemäßen Deckels für das Unterteil des erfindungsgemäßen Dampfgarers aus Fig. 1.
- Fig. 2B: Eine Seitenansicht des Deckels aus Fig. 2A.
- Fig. 3: Eine Ansicht eines erfindungsgemäßen Dampfgareinsatzes für den erfindungsgemäßen Dampfgarer aus Fig. 1.
- Fig. 4: Eine Ansicht eines weiteren erfindungsgemäßen Dampfgareinsatzes für den erfindungsgemäßen Dampfgarer.
- Fig. 5: Ansicht des erfindungsgemäßen Dampfgarers in Kombination mit dem erfindungsgemäßen Dampfgareinsatz aus Fig. 3.
- Fig. 6: Ansicht des erfindungsgemäßen Dampfgarers in Kombination mit den erfindungsgemäßen Dampfgareinsätzen aus Fig. 3 und Fig. 4, sowie dem erfindungsgemäßen Deckel aus Fig. 2A, 2B.

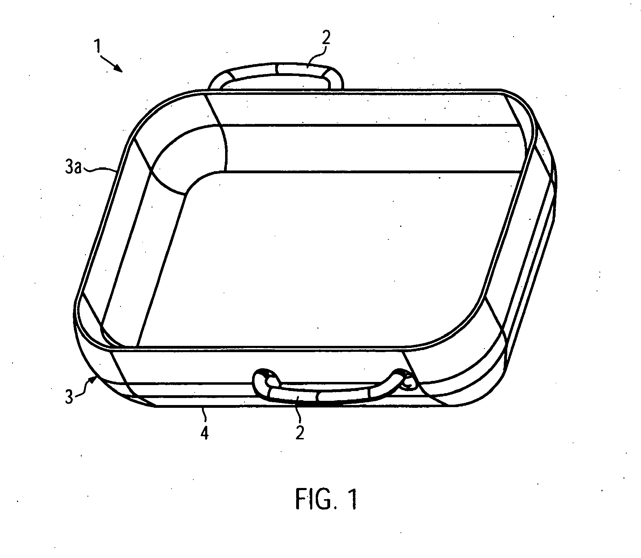

Figur 1 zeigt einen erfindungsgemäßen Dampfgarer 1. Das erfindungsgemäße Unterteil 3 mit hochgezogenen Seitenwänden 3a bildet die Grundform 3, 3a des Dampfgarers 1. Die Grundform 3, 3a kann einen starken Boden 4 besitzen und kann aus Eisen-Stählen mit innen und außen geeigneter Beschichtung, zum Beispiel aus Emaille wie Silargan mit dazu typischerweise mit vernickeltem oder verchromtem Schüttrand, oder Chrom-Nickel-Stählen oder Chrom-Stählen verwendet werden. Die Übergänge vom Boden 4 des Unterteils auf die Seitenwände 3a können sanft abgerundet sein, wie in Figur 1 gezeigt.

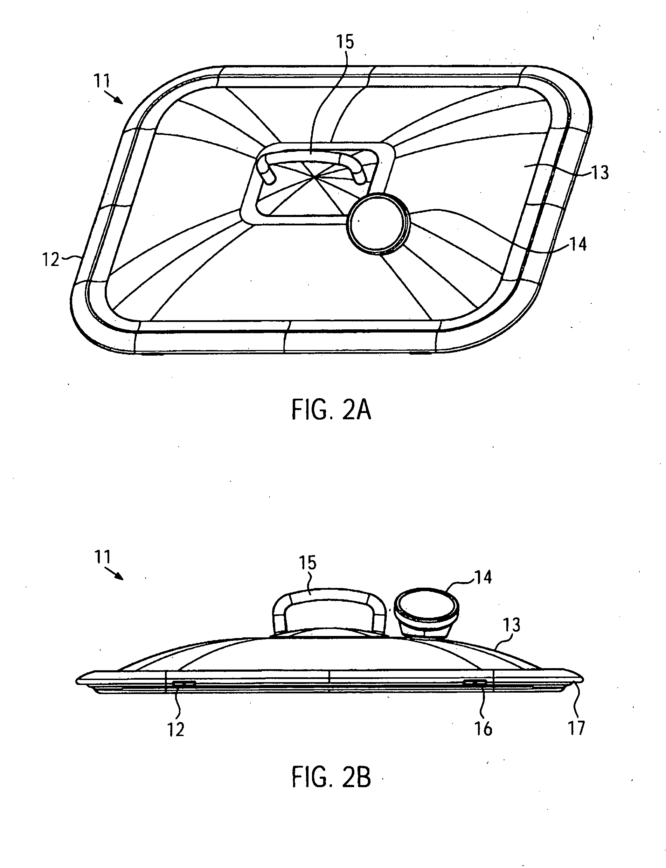

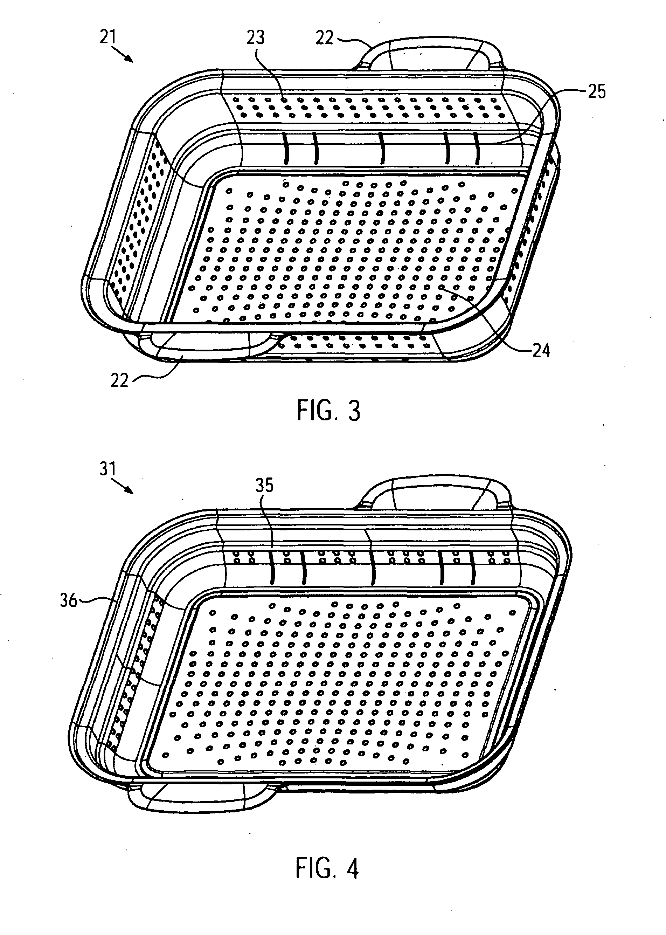

Figur 1 zeigt an zwei gegenüberliegenden Seitenwänden versetzt zueinander angeordneten Griffe 2, die aus wärmeisolierenden Materialien ausgebildet sein können. Die Griffe 2 in Figur 1 sind an den hochgezogenen Seitenwänden des Unterteils sind diametral versetzt zueinander angeordnet. Es ist jedoch auch denkbar, die Griffe in die Seitenwände zu integrieren. Jeder einzelne der Griffe 2 kann, wie in Figur 2 gezeigt, an zwei Punkten an die Außenseite der Seitenwände angeformt sein und kann eine ovale, kreisförmige oder gerade Griffform aufweisen, die ein Anfassen des jeweiligen Griffes sowohl mit bloßen Händen, als auch mit Hilfsmitteln wie Handschuhen, Handtüchern oder Topflappen ermöglicht. Die Form des erfindungsgemäßen Dampfgarers 1, die Kontur des Bodens 4 der Grundform 3, 3a beruht auf der Anpassung an handelsübliche ovale Kochzonen und handelsübliche Backöfen. Die Grundform 3, 3a des Dampfgarers 1 kann von rechteckiger oder ovaler Form, oder eine Mischung aus Rechteck und Oval sein, mit bauchig geformten Seitenwänden und mit abgerundeten Ecken und Kanten, also wannenförmig oder wannenähnlich sein. Figur 1 zeigt die Anordnung der Griffe 2 an den langen Seiten der Seitenwände der Grundform 3, 3a des erfindungsgemäßen Dampfgarers 1. Diese Anordnung ermöglicht insbesondere die Verwendung des Dampfgarers in kleinen Backöfen. Die nach oben aufgeweitete Grundform 3, 3a des erfindungsgemäßen Dampfgarers 1 bietet genügend Volumen zum Zubereiten von mehreren Portionen von Gerichten mit üblichen Abmessungen wie z.B. Fisch, Hähnchen, Ente, Aufläufen, Gemüse etc. Die Höhe der Seitenwände ist beispielhaft darauf abgestimmt, dass die in Figuren 3 und 4 gezeigten Dampfgareinsätze mit der Grundform 3, 3a kombinierbar sind.

Figur 2 zeigt einen erfindungsgemäßen Deckel 11 zur Verwendung mit dem erfindungsgemäßen Dampfgarer 1. Der Deckel kann dabei zum Aufsetzen oder Auflegen auf die erfindungsgemäße Grundform 3, 3a des Dampfgarers 1 geeignet sein und kann einen Auflagerand 17 besitzen. Ferner kann der Deckel 11 auch auf erfindungsgemäße Dampfgareinsätze 21 oder 31, welche in die Grundform 3, 3a eingesetzt werden können, siehe Figuren 3, 4 und 6, aufgesetzt werden. Der Deckel 11 weist eine Zarge 12 auf, welche aus Silikon gefertigt sein kann, aber auch andere temperaturstabile Materialien sind für die Zarge verwendbar, sofern sie, ähnlich wie Silikon, Eigenschaften besitzen, die für die Zubereitung von Lebensmitteln unbedenklich sind. Die Zarge 12 umläuft den Randkantenbereich des Deckelgrundkörpers 13, kurz Deckelkörper, der zum Beispiel bevorzugt aus Glas ausgebildet sein kann. Ebenso können für den Grundkörper hitzebeständige Kunststoffe, keramische Materialien mit Metalllegierungen oder geeignete Kombinationen dieser Materialien verwendet werden, wobei transparenten Materialien vorteilhaft sein können, um eine Sichtkontrolle zu ermöglichen. Jedoch ist es nicht zwingend erforderlich, ein transparentes Material zu verwenden. Der Deckelgrundkörper 13 des Deckels 12 kann mittels einer Vergussmasse mit der Zarge 12 verbunden sein. Dabei kann die Zarge als Kunststoffteil, beispielsweise im Spritzguss, hergestellt sein. Beim Aufliegen oder Aufsetzen auf die Grundform 3, 3a des Dampfgarers kann der Deckel derart aufliegen, dass eine Dichtkante zwischen dem Deckel und der Grundform bedingte Dichtigkeit gewährleisten kann.

Der Deckel 11 kann eine nach außen gewölbte Form aufweisen, bei der typischerweise mittig an der obersten Stelle ein Deckelgriff 15 angebracht ist. Der Deckelgriff 15 kann aus wärmeisolierendem Material, Metalllegierungen oder Keramik hergestellt und etwa in der Mitte des Deckels befestigt sein. Wie in Figur 2A, 2B gezeigt, kann im Bereich des Deckels 11 der Grundkörper verstärkt sein. Der Deckel 11 lässt sich durch den Griff mit einer Hand greifen und von dem erfindungsgemäßen Dampfgarer abheben und ebenso wieder aufsetzen. Der Deckel 11 in Figuren 2A, 2B weist definierte Stellen 16 auf, welche bei Verwendung des Deckels 11 unmittelbar auf der Grundform 3, 3a, und bei Verwendung in Kombination mit der Grundform 3, 3a und Dampfgareinsätzen 21 und 31, siehe Figuren 3 - 6, als Dampfaustrittsöffnungen dienen können. Die Öffnungen 16 sind beispielsweise im Rand 17 des Deckels 11 ausgebildet, mit dem der Deckel auf der Grundform 3, 3a oder den Dampfgareinsätzen 21, 31 aufliegt oder aufsitzt, oder sie sind in der Nähe Randes 17, etwa oberhalb oder unterhalb des Randes 17 ausgebildet. Sofern der Rand 17 unmittelbar auf der Grundform 3, 3a aufsitzt, können die Öffnungen unterhalb des Randes 17 ausgebildet sein, siehe Figur 2A. In Figuren 2A und 2B sind vier Öffnungen 16 gezeigt, wobei jeweils zwei Öffnungen in jeder langen Seite des Deckels ausgebildet sind. Die Öffnungen 16 in Figuren 2A und 2B sind länglich und schlitzähnlich. Es sind jedoch auch andere Formen der Öffnungen denkbar und auch deren Anzahl kann variieren. Die Öffnungen 16 können dazu dienen, bei aufgesetztem Deckel 11 auf den Dampfgarer 1 einen unerwünschten Unterdruck zu verhindern, welcher das Abheben des Deckels 11 von der Grundform 3, 3a behindern oder erschweren würde, insbesondere wenn der vorher erwärmte Dampfgarer sich abkühlt. Bei Verwendung des Deckels 11 in Kombination mit der Grundform 3, 3a und wenigstens einem Dampfgareinsatz 21 oder 31, dienen die Öffnungen 16 während des Dampfgarens als Dampfaustrittsöffnungen, um zu verhindern, dass ein zu hoher Innendruck entsteht. Die Öffnungen 16 sind so dimensioniert, dass die Dampfgeschwindigkeit beim Austritt von Dampf aus dem System gering ist und eine Kondenswasserbildung in der Umgebung des Dampfgarers 1 reduziert oder unterbunden werden kann. Der Deckel 11 kann eine Öffnung für einen Thermometereinsatzes 14, also ein Thermometers aufweisen. Die Öffnung kann nahe dem Deckelgriff 15 ausgebildet sein, etwa nahe der Mitte des Dampfgarers 1.

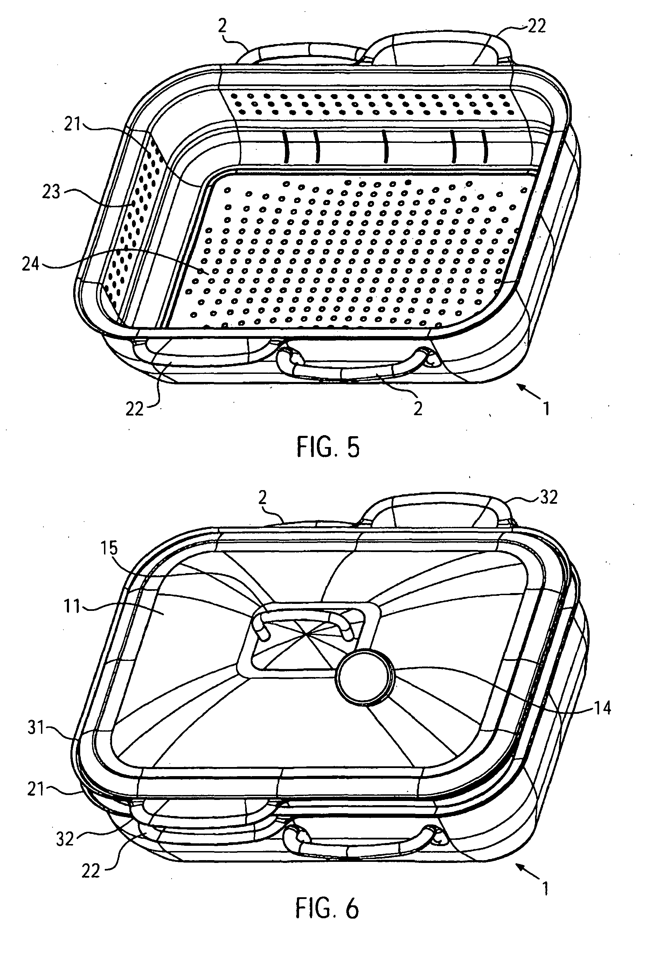

Die Figuren 3 und 4 zeigen erfindungsgemäße Dampfgareinsätze 21 und 31, zur Verwendung in Kombination mit dem erfindungsgemäßen Dampfgarer 1. Figur 3 zeigt einen ersten Dampfgareinsatz 21 mit einer höheren Seitenhöhe als bei einem zweiten, flacherem Dampfgareinsatz 31 in Figur 4. Die Dampfgareinsätze 21, 31 weisen Griffe 22 und 32 auf, welche maßgeblich den Griffen 2 der Grundform 3, 3a des erfindungsgemäßen Dampfgarer 1 in deren Außenform entsprechen. Die Griffe 22, 32 sind typischerweise an den Dampfgareinsätzen angeformt. Die Position der Griffe 22, 32 der Dampfgareinsätze 21, 31 kann ebenso an zwei gegenüberliegenden Seiten versetzt sein. Vorteilhafterweise ist die Position der Griffe 22, 32, wie in Figuren 3 und 4 gezeigt, gegenüber der Anordnung der Griffe 2 der Grundform 3, 3a des Dampfgarers 1 gespiegelt. Die Einsätze 21, 31 können mit Hitzeschutzmitteln, wie oben erwähnt, unabhängig von der Grundform 3, 3a aus dem Dampfgarer 1 gehoben werden. Die Griffe 22, 32 der Dampfgareinsätze 21, 31 können aus wärmeisolierendem Material oder Metalllegierungen sein. Die Dampfgareinsätze 21, 31 weisen an ihren jeweiligen Oberkanten nach außen gewölbte Randkanten auf, die das Einsetzen, Aufsetzen oder Einhängen in die Grundform 3, 3a des Dampfgarers 1 ermöglichen. Die Außenkanten der Dampfgareinsätze 21, 31 können abgerundet geformt sein. Die Randkanten ermöglichen das Aufsetzen oder Auflegen des Deckels 11. Die Dampfgareinsätze 21, 31 weisen Durchbrüche, zum Beispiel Löcher im Boden, 24, sowie in den Seitenwänden, 23, auf, welche das Durchströmen von Wasserdampf ermöglichen. Ebenso können zum Beispiel Kondenswasser oder aus Speisen (Gemüse) austretende Flüssigkeiten durch diese Öffnungen in die Grundform zurücklaufen. Es können ein oder mehrere Dampfgareinsätze 21, 31 zusammen mit der Grundform 3, 3a des Dampfgarers 1 kombiniert und gestapelt werden. Dabei ist der Rand der Dampfgareinsätze 21, 31 hoch genug, dass jeder Einsatz einzeln aus der Grundform 3, 3a oder einem darunter eingesetzten Einsatz heraus gehoben werden kann. Ferner können die Einsätze 21, 31 mit dem Deckel 11 abgedeckt werden. Dadurch können ein Dampfgarsystem, wie in Figur 5 gezeigt, oder ein Doppelstock-Dampfgarsystem, wie in Figur 6 gezeigt, mit oder ohne Deckel 11 kombiniert werden. Im Hinblick auf eine vom Benutzer gewünschte gleichzeitige Zubereitung verschiedener Gerichte, Gemüse, Beilagen etc., ein oder mehrere Teilerbleiche (nicht gezeigt), an geeigneten Positionen 25, 35 in die Dampfgareinsätze 21, 31 einsetzen. Für die Positionierung der Teilerbleche können, siehe Figuren 3 - 5, geeignete Schlitze oder Sicken oder Bohrungen dienen. Die Teiler haben dabei etwa die Hälfte bis die volle Höhe bezogen auf die Höhe der Dampfgareinsätze 21, 31, wie durch die in Figuren 3 - 5 gezeigten Positionen (Schlitze) angedeutet, wobei sich beispielsweise eine maximale Höhe der Teiler durch den maximalen Abstand der jeweiligen Böden der Dampfgareinsätze 21 und 31 beim Einsatz als Doppelstock-Dampfgarsystem ergibt.

Für die Dampfgareinsätze 21, 31 kann der über die Grundform 3, 3a, hinausragende Rand 36 mit nach innen zeigendem Gefälle geformt sein, dass sich am Deckel 11 kondensierendes Wasser in den Innenraum des Dampfgarsystems zurück läuft. Der Boden der Dampfgareinsätze 21, 31 ist, wie in Figuren 3 und 4 gezeigt, in Höhenstufen geformt, so ein sicheres Bewegen der Dampfgareinsätze 21, 31 auf empfindlichen Oberflächen möglich ist. Die Dampfgareinsätze 21, 31 bestehen beispielsweise aus Chrom-Nickel-Stählen oder Chrom-Stählen, es können jedoch auch andere geeignete Materialien verwendet werden, welche dem hohen Wassergehalt und dem Temperaturbereich beim Dämpfen standhalten und welche für den Einsatz mit Lebensmitteln geeignet sind. Das Material Chrom-Nickel-Stahl kann es ermöglichen, einen Einsatz 21, 31 als Behältnis für Gerichte verwenden zu können, die bei anderen Bedingungen als beim Dampfgaren zubereitet werden sollen oder wenn ein weiterer Zubereitungsschritt, etwa Überbacken, im Anschluss an einen Garprozess gewünscht ist, wobei Temperaturen von mehr 100°C auftreten können. Es sind also zusätzliche Verwendungsmöglichkeiten für die Dampfgareinsätze 21, 31 nach Beendigung eines Garprozesses oder sogar ohne die Grundform 3, 3a denkbar.

Es versteht sich, dass in den zuvor beschriebenen Ausführungsbeispielen genannte Merkmale nicht auf diese speziellen Kombinationen beschränkt und auch in beliebig anderen Kombinationen im Rahmen der Patentansprüche möglich sind. Insbesondere können die Formen der Durchbrüche/Öffnungen in den Dampfgareinsätzen verschiedene Formen oder Geometrien aufweisen.

## Patentansprüche

1. Dampfgarer (1) umfassend
ein Unterteil (3) mit hochgezogenen Seitenwänden (3a), wobei die Seitenwände zwei lange (3a) und zwei kurze Seiten umfassen, mit an den gegenüberliegenden langen Seitenwänden (3a) diametral versetzt zueinander angebrachten Griffen (2);
einen Deckel (11) mit einer Zarge (12), einem Deckelkörper (13), einem Deckelgriff (15), und mehreren Öffnungen (16) zum Druckausgleich und
mindestens einen Dampfgareinsatz (21, 31) zum Einsetzen in das Unterteil (3) wobei der Dampfgareinsatz (21, 31) mit Durchbrüchen (24) zum Durchströmen von Dampf versehen ist und mit versetzt angeordneten Griffen (22, 32).

2. Dampfgarer (1) nach Anspruch 1, wobei die Durchbrüche(23) zum Durchströmen von Dampf in den Seitenwänden oder im Boden ausgebildet sind.

3. Dampfgarer (1) nach Ansprüchen 1 - 2, wobei die Griffe (22, 32) des Dampfgareinsatzes (21,31) gespiegelt bezüglich der Griffe (2) des Unterteils (3) angeordnet sind.

4. Dampfgarer (1) nach Ansprüchen 1 - 3, wobei der Dampfgareinsatz (21, 31) stapelbar ist.

5. Dampfgarer (1) nach Ansprüchen 1 - 4, wobei der Dampfgareinsatz (21,31) ferner Positioniereinrichtungen (25), insbesondere Schlitze, Sicken oder Bohrungen, für ein oder mehrere Teilerbleche umfasst.

6. Dampfgarer (1) nach Ansprüchen 1 - 5 , wobei der Dampfgareinsatz (21,31) aus Chrom-Nickel-Stählen oder Chrom-Stählen ausgebildet ist.

7. Dampfgarer (1) nach Ansprüchen 1 - 6, wobei der Dampfgareinsatz (21,31) einen Boden mit Höhenstufen aufweist.

8. Dampfgarer (1) nach Ansprüchen 1 - 7, wobei der Dampfgareinsatz (21,31) einen Rand (36) mit nach innen zeigendem Gefälle aufweist.

9. Dampfgarer (1) nach Ansprüchen 1 - 8, wobei die Zarge (12) des Deckels (11) aus Silikon gefertigt ist.

10. Dampfgarer (1) nach Ansprüchen 1 - 8, wobei die mehreren Öffnungen (16) des Deckels (11) in den Seitenrändern (17) des Deckels (11) oder im Deckelkörper ausbebildet sind.

11. Dampfgarer (1) nach Anspruch 10, wobei die Öffnungen (16) des Deckels (11) schlitzartig ausgebildet sind.

12. Dampfgarer (1) nach Ansprüchen 10 - 11, wobei die Öffnungen (16) des Deckels (11) mit Membranen versehen sind.

13. Dampfgarer (1) nach Ansprüchen 1 - 12, mit einer Öffnung im Deckel (11) in der Wölbung des Deckelkörpers, welche ausgebildet ist, einenThermometereinsätz (14) oder ein Thermometer durchzustecken oder einen Druckausgleich herzustellen.

## Claims

1. A steam cooker (1) comprising
a lower part (3), which has raised side walls (3a), wherein the side walls comprise two long (3a) and two short sides, and which has handles (2) attached to the opposite long side walls (3a) so as to be diametrically offset relative to each other;
a lid (11), which has a frame (12), a lid body (13), a lid handle (15), and a plurality of openings (16) for pressure equalization, and
at least one steam cooking insert (21, 31) to be inserted into the lower part (3), wherein the steam cooking insert (21, 31) is provided with through-holes (24) for steam to flow through and with handles (22, 32) arranged at an offset.

2. The steam cooker (1) according to claim 1, wherein the through-holes (24) for steam to flow through are formed in the side walls or in the bottom.

3. The steam cooker (1) according to claims 1 to 2, wherein the handles (22, 23) of the steam cooking insert (21, 31) are arranged mirrored with respect to the handles (2) of the lower part (3).

4. The steam cooker (1) according to claims 1 to 3, wherein the steam cooking insert (21, 31) is stackable.

5. The steam cooker (1) according to claims 1 to 4, wherein the steam cooking insert (21, 31) further comprises positioning means (25), particularly slots, beads or holes for one or a plurality of divider plates.

6. The steam cooker (1) according to claims 1 to 5, wherein the steam cooking insert (21, 31) is made from chromium-nickel steels or chromium steels.

7. The steam cooker (1) according to claims 1 to 6, wherein the steam cooking insert (21, 31) comprises a bottom with height levels.

8. The steam cooker (1) according to claims 1 to 7, wherein the steam cooking insert (21, 31) comprises an edge (26) with an inwardly oriented slope.

9. The steam cooker (1) according to claims 1 to 8, wherein the frame (12) of the lid (11) is made from silicone.

10. The steam cooker (1) according to claims 1 to 8, wherein the plurality of openings (16) of the lid (11) are formed in the side edges (17) of the lid (11) or in the lid body.

11. The steam cooker (1) according to claim 10, wherein the openings (16) of the lid (11) are slotted.

12. The steam cooker (1) according to claims 10 to 11, wherein the openings (16) of the lid (11) are provided with membranes.

13. The steam cooker (1) according to claims 1 to 12, comprising an opening in the lid (11) in the bulge of the lid body which is configured to put a thermometer insert (14) or a thermometer therethrough or for pressure equalization.

## Revendications

1. Cuiseur vapeur (1) comprenant
une partie inférieure (3) présentant des parois latérales (3a) montantes, les parois latérales comprenant deux côtés longs (3a) et deux côtés courts, avec des poignées (2) rapportées de manière diamétralement décalée sur les deux parois latérales longues (3a) opposées ;
un couvercle (11) avec une bordure d'encadrement (12), un corps de couvercle (13), une poignée de couvercle (15) et plusieurs ouvertures (16) pour la compensation de pression, et
au moins un insert de cuisson vapeur (21, 31) destiné à être mis en place dans la partie inférieure (3), l'insert de cuisson vapeur (21, 31) étant pourvu de passages (24) pour permettre la traversée d'un écoulement de vapeur, et pourvu de poignées (22, 32) agencées de manière décalée.

2. Cuiseur vapeur (1) selon la revendication 1, dans lequel les passages (23) pour la traversée de l'écoulement de vapeur sont réalisés dans les parois latérales ou dans le fond.

3. Cuiseur vapeur (1) selon les revendications 1 à 2, dans lequel les poignées (22, 32) de l'insert de cuisson vapeur (21, 31) sont agencées de manière réciproquement inversée par rapport aux poignées (2) de la partie inférieure (3).

4. Cuiseur vapeur (1) selon les revendications 1 à 3, dans lequel l'insert de cuisson vapeur (21, 31) est empilable.

5. Cuiseur vapeur (1) selon les revendications 1 à 4, dans lequel l'insert de cuisson vapeur (21, 31) comprend par ailleurs des dispositifs de positionnement (25), notamment des fentes, des moulures ou des perçages, pour une ou plusieurs tôles séparatrices.

6. Cuiseur vapeur (1) selon les revendications 1 à 5, dans lequel l'insert de cuisson vapeur (21, 31) est réalisé en des aciers au nickel-chrome ou des aciers au chrome.

7. Cuiseur vapeur (1) selon les revendications 1 à 6, dans lequel l'insert de cuisson vapeur (21, 31) présente un fond avec des étagements en hauteur.

8. Cuiseur vapeur (1) selon les revendications 1 à 7, dans lequel l'insert de cuisson vapeur (21, 31) comporte une bordure (36) avec une pente descendante dirigée vers l'intérieur.

9. Cuiseur vapeur (1) selon les revendications 1 à 8, dans lequel la bordure d'encadrement (12) du couvercle (11) est réalisée en silicone.

10. Cuiseur vapeur (1) selon les revendications 1 à 8, dans lequel lesdites plusieurs ouvertures (16) du couvercle (11) sont réalisées dans les bords latéraux (17) du couvercle (11) ou dans le corps de couvercle.

11. Cuiseur vapeur (1) selon la revendication 10, dans lequel les ouvertures (16) du couvercle (11) se présentent sous forme de fentes.

12. Cuiseur vapeur (1) selon les revendications 10 à 11, dans lequel les ouvertures (16) du couvercle (11) sont pourvues de membranes.

13. Cuiseur vapeur (1) selon les revendications 1 à 12, comprenant une ouverture dans le couvercle (11) dans la partie bombée du corps de couvercle, qui est conçue pour y engager un insert de thermomètre (14) ou un thermomètre, ou pour établir une compensation de pression.
